(19) Europäisches Patentamt
European Patent Office
Office européen des brevets

(11) **EP 4 505 254 B1**

(12) **EUROPÄISCHE PATENTSCHRIFT**

(45) Veröffentlichungstag und Bekanntmachung des Hinweises auf die Patenterteilung:
**31.12.2025   Patentblatt 2026/01**

(21) Anmeldenummer: **22732895.2**

(22) Anmeldetag: **24.05.2022**

(51) Internationale Patentklassifikation (IPC):
**G05B 19/042** *(2006.01)*      **G05B 23/02** *(2006.01)*
**G06N 3/045** *(2023.01)*      **G05B 13/02** *(2006.01)*

(52) Gemeinsame Patentklassifikation (CPC):
**G05B 23/024; G05B 19/0428; G05B 23/0281; G06N 3/045**

(86) Internationale Anmeldenummer:
**PCT/EP2022/063976**

(87) Internationale Veröffentlichungsnummer:
**WO 2023/227199 (30.11.2023 Gazette 2023/48)**

(54) **COMPUTER-IMPLEMENTIERTES VERFAHREN UND SYSTEM ZUR ANOMALIE-ERKENNUNG**

COMPUTER-IMPLEMENTED METHOD AND SYSTEM FOR ANOMALY DETECTION

PROCÉDÉ ET SYSTÈME MIS EN OEUVRE PAR ORDINATEUR POUR LA DÉTECTION D'ANOMALIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.02.2025   Patentblatt 2025/07**

(73) Patentinhaber: **Siemens AG Österreich**
**1210 Wien (AT)**

(72) Erfinder: **SCHALL, Daniel**
**2020 Hollabrunn (AT)**

(74) Vertreter: **Siemens Patent Attorneys**
**Postfach 22 16 34**
**80506 München (DE)**

(56) Entgegenhaltungen:
EP-A1- 3 876 060          EP-A1- 3 919 996
WO-A1-2022/101515     US-A1- 2020 310 370

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein computer-implementiertes Verfahren und ein System zur Anomalie-Erkennung bei der Steuerung eines technischen Geräts durch ein Steuer-Mittel.

Ferner betrifft die Erfindung ein Computerprogramm, einen elektronisch lesbaren Datenträger und ein Datenträgersignal.

In Fabriken werden oft System auf Basis künstlicher Intelligenz (kurz "KI") eingesetzt, um beispielsweise Anomalien in Herstellungsschritten zu erkennen und entsprechende Gegen-Maßnahmen einzuleiten, um die Qualität der Produktion zu verbessern und die Effizient zu steigern, indem Zeiten mit einem Produktions-Stillstand geringgehalten werden.

Mit dem häufig eingesetzten Konzept von "Blackbox"-KI-Modelle ist es schwer oder sogar unmöglich zu erklären, warum eine KI zu einer bestimmten Entscheidung gelangt ist. Dadurch wird das Vertrauen in KI-basierte Systeme gesenkt und kann Menschen daran hindern, KI weiter anzuwenden und deren Vorteile zu nutzen.

Dies ist insbesondere für Systeme wichtig, welche Daten von programmierbaren Steuerungen sammeln und eine Anomalie-Erkennung durchführen. Dabei ist ein geeignetes KI-Modell ein Auto-Encoder, welcher ein normales Verhalten oder den guten Zustand eines Systems lernt und während der Laufzeit Abweichungen vom normalen Verhalten erkennt. Ein Indikator für eine Abweichung ist der sogenannte Rekonstruktionsfehler. Ist dieser hoch, kann angenommen werden, dass eine Anomalie vorliegt. Dieser Ansatz ist einfach, aber effektiv. Ein Benutzer weiß jedoch nicht, welches Zusammenspiel von Eingabevariablen oder welche Zusammenhänge der Merkmale zu dem hohen Rekonstruktionsfehler geführt hat. Handelt es sich bei den Eingangsgrößen beispielsweise um Strom, Spannung, Vibration, Temperatur, Drehmoment, Antriebsdrehzahl oder Druck etc., ist es häufig nicht ersichtlich, welcher Zustand der Größen die hohe Abweichung bezüglich des Rekonstruktionsfehlers beeinflusst hat. Der Rekonstruktionsfehler ist die Summe der Abweichungen zwischen den Eingabevariablen und den rekonstruierten Ausgabevariablen. Somit kann eine Aussage getroffen werden welche Eingabevariablen, wie beispielsweise Drehmoment oder Antriebsdrehzahl, maßgeblich für einen hohen Rekonstruktionsfehler sind, jedoch nicht welche Zustände der Eingabevariablen ausschlaggebend waren, wie beispielsweise hohe Vibration bei niedriger Temperatur und niedriger Antriebsdrehzahl.

Im Stand der Technik werden einfachere Modelle parallel zu Deep-Learning-Modellen wie Entscheidungsbäumen (engl. "random forests", kurz "RF") verwendet, die eine hervorragende Interpretierbarkeit unterstützen, aber weniger leistungsfähig sind.

Andererseits ist das Konzept der sogenannten "explainable AI", kurz "XA" bekannt. Die meisten Methoden geben dabei eher allgemein an, welche spezifischen Bereiche der Eingabedaten während der Klassifizierung vom Modell beachtet werden.

Die Veröffentlichung EP 3 876 060 A1 zeigt ein Verfahren zur Analyse der Ursache für einen anomalen Zustand einer Maschine in einem auf einem Modell basierenden Überwachungsverfahren, das anomale Zustände der Maschine erkennt, indem es ein Anomalie-Maß bestimmt, wobei das Modell Maschinenzustände modelliert, indem mindestens zwei Betriebsparameter der Maschine, die als Eingabewerte des Modells dienen, als Ausgabewerte rekonstruiert werden, wobei in dem Modell die Ausgabewerte gegenüber den jeweils entsprechenden Eingabewerten Abweichungen aufweisen und das Modell durch maschinelles Lernen trainiert wurde, die Abweichungen zu minimieren.

Die Veröffentlichung US 2020/310370 A1 beschreibt ein Steuerungssystem mit einem Speicher, welcher eine Folge von Sensordaten speichert, die von einem oder mehreren Sensoren empfangen werden. Das Steuerungssystem verfügt über einen Prozessor, der die Sensordaten verarbeitet, um eine Folge abgeleiteter Sensordatenwerte zu berechnen. Ein Autoencoder empfängt die Folge abgeleiteter Sensordatenwerte und berechnet eine Vorwärtsvorhersage der Folge abgeleiteter Sensordatenwerte. Der Autoencoder wurde trainiert, indem er eine Beziehung zwischen den Positionen der abgeleiteten Sensordatenwerte, die in einem latenten Raum des Autoencoders kodiert sind, herstellt. Ein Prozessor initiiert die Steuerung eines Geräts mithilfe der Vorwärtsvorhersage.

Es ist daher Aufgabe der Erfindung, ein Verfahren zur Anwendung von künstlicher Intelligenz bereitzustellen, welches beispielsweise einem Maschinen-Benutzer verbesserte Informationen bereitstellt, weshalb bei einem Produktionsschritt ein Fehler aufgetreten ist und dementsprechend gegensteuern kann, um den Fehler bei der weiteren Produktion zu verringern oder zu beheben.

Mit anderen Worten soll ein Verfahren geschaffen werden, welches die Ursache bei einem erkannten Fehler in einem System, welches auf einem Auto-Encoder zur Anomalie-Erkennung basiert, besser diagnostiziert und vorzugsweise automatisch und treffsicher behebt.

Die erfindungsgemäße Aufgabe wird durch ein Verfahren eingangs genannter Art gelöst, indem folgende Schritte ausgeführt werden:

a) Bereitstellen von Eingangs-Daten durch das Steuer-Mittel, umfassend Sensor-Daten, welche von einem Sensor-Mittel am technischen Gerät erfasst werden, an einem Daten-Eingang, Kodieren der Eingangs-Daten mithilfe eines Auto-Encoders zu kodierten Daten, und dekodieren der kodierten Daten mithilfe des Auto-Encoders zu Ausgangs-Daten, und Bestimmen und Klassifizieren eines Rekonstruktions-Fehlers,

b) Bestimmen einer Ziel-Variable aus dem Rekonstruktions-Fehler, wenn der Rekonstruktions-Fehler eine vorbestimmte Rekonstruktions-Fehlergrenze überschreitet,

c) Bereitstellen eines Modells auf Basis künstlicher Intelligenz, welches mithilfe von historischen Daten von Rekonstruktions-Fehlern sowie entsprechenden Eingangs-Merkmalen aus dem Auto-Encoder erzeugt und trainiert wurde, an eine Auswertungs-Vorrichtung,

d) Bestimmen zumindest einer Prädiktion für die Ziel-Variable und optional für weitere Variablen, welche von der Ziel-Variable abhängen, anhand des Modells und der Klassifizierung des Rekonstruktionsfehlers durch die Auswertungs-Vorrichtung, und Bereitstellen der zumindest einen Prädiktion an eine Analyse-Vorrichtung,

e) Ermitteln einer Regel zur Verbesserung des Rekonstruktions-Fehlers durch die Analyse-Vorrichtung aus der zumindest einen Prädiktion und einem vorbestimmten Regel-Satz, Bereitstellen der Regel an das Steuer-Mittel und Ansteuern des technischen Geräts mithilfe der Regel durch das Steuer-Mittel.

Dadurch wird erreicht, dass auf einfache Weise der Rekonstruktionsfehler eines Auto-Encoders analysiert werden kann und eine treffsichere Ursache für den erkannten Fehler identifiziert wird.

Die erfindungsgemäße Aufgabe wird durch ein System eingangs genannter Art gelöst, umfassend ein Sensor-Mittel zur Erfassung von Sensor-Daten betreffend das technische Gerät, sowie einen Speicher zur Speicherung von historischen Daten, eine Auswertungs-Vorrichtung und eine Analyse-Vorrichtung, und das System dazu eingerichtet ist, das erfindungsgemäße Verfahren auszuführen.

In einer Weiterbildung der Erfindung ist es vorgesehen, dass das System an einer Edge eines Klienten-Server-Systems angeordnet ist.

Es ist vorteilhaft, wenn ein effizientes Verfahren an der Edge eines verteilten Systems ausgeführt werden kann, da die Verfügbarkeit höher ist und Kommunikationskosten reduziert werden können. Jedoch verfügt eine Edge-Rechenvorrichtung meist nicht über große Rechen- und Speicher-Kapazitäten, weshalb nur besonders effiziente Verfahren zur Anomalie-Erkennung eingesetzt werden können, wie das erfindungsgemäße Verfahren.

In einer Weiterbildung der Erfindung ist es vorgesehen, dass das Sensor-Mittel eine Kamera ist und die Sensor-Daten Kamera-Bilder sind.

Das erfindungsgemäße Verfahren ist besonders effizient bei der Analyse von Bildern in Kombination mit einem Auto-Encoder.

Die erfindungsgemäße Aufgabe wird auch durch ein Computerprogramm gemäß Patentanspruch 5 gelöst.

Die erfindungsgemäße Aufgabe wird auch durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Recheneinrichtung das erfindungsgemäße Verfahren durchführen.

Ein Datenträgersignal überträgt das erfindungsgemäße Computerprogramm.

Die Erfindung wird nachfolgend anhand eines in den beigeschlossenen Zeichnungen dargestellten Ausführungsbeispiels näher erläutert. In den Zeichnungen zeigt:

Fig. 1    ein Ausführungsbeispiel für das erfindungsgemäße Verfahren in allgemeiner und vereinfachter Form,

Fig. 2    das Ausführungsbeispiel für das erfindungsgemäße Verfahren im Detail,

Fig. 3    ein Ausführungsbeispiel für ein Ablaufdiagramm für das erfindungsgemäße Verfahren.

**Fig**. **1** zeigt ein Ausführungsbeispiel für das erfindungsgemäße Verfahren in allgemeiner und vereinfachter Form.

Das Verfahren ist computer-implementiert, das heißt ein oder mehrere Schritte können auf einem Computer ausgeführt werden.

In dem Verfahren zur Anomalie-Erkennung bei der Steuerung eines technischen Geräts TD durch ein Steuer-Mittel PLC ist es vorgesehen, dass Eingangs-Daten IN durch das Steuer-Mittel PLC an einem Daten-Eingang eines Auto-Encoders bereitgestellt werden.

Die Eingangs-Daten IN umfassen Sensor-Daten, welche von einem Sensor-Mittel SM am technischen Gerät TD erfasst werden, beispielsweise Bilddaten von einer Kamera, welche die Produktion von Produkten optisch erfasst und für eine optische Inspektion von erzeugten Produkten eingesetzt wird.

Das Sensor-Mittel SM ist vorzugsweise mit dem Steuer-Mittel PLC verbunden und erfasst die Sensor-Daten, welche über das Steuer-Mittel PLC dem Auto-Encoder bereitgestellt werden.

Der Auto-Encoder kodiert mithilfe einer Kodier-Vorrichtung COD die Eingangs-Daten IN zu kodierten Daten C.

Ferner dekodiert der Auto-Encoder mithilfe einer Dekodier-Vorrichtung DEC die kodierten Daten C zu Ausgangs-Daten OUT und bestimmt außerdem einen Rekonstruktions-Fehlers RE.

Dem Rekonstruktions-Fehler RE werden vorbestimmte Fehlergrenzwerte zugewiesen, innerhalb welcher ein Sensor-Wert zulässig ist oder eben nicht.

Der Rekonstruktions-Fehler RE dient nun dazu, eine Anomalie in den Eingangs-Daten IN beziehungsweise Ausgangs-Daten OUT zu erkennen.

Das technischen Gerät TD wird mithilfe des Steuer-Mittels PLC angesteuert.

Eine Auswertungs-Vorrichtung XLP wird nun dafür verwendet, eine Prädiktion für einen Rekonstruktions-Fehler RE anhand eines Modells auf Basis künstlicher Intelligenz zu bestimmen.

Die Prädiktion wird an eine Analyse-Vorrichtung REA übermittelt, welche eine Regel zur Verbesserung des Rekonstruktions-Fehlers RE aus einem vorbestimmten Regel-Satz bestimmt. Damit soll eine Verbesserung der nachfolgenden Produktion einhergehen, da ein Fehler in der Produktion erkannt wurde und die Ursache daraus in Form der Prädiktion abgeleitet wurde, und eine entsprechende Maßnahme zur Verbesserung der Produkteigenschaften mithilfe des Steuer-Mittel PLC eingeleitet werden kann, indem das technische Gerät TD mithilfe der Regel durch das Steuer-Mittel PLC angesteuert wird.

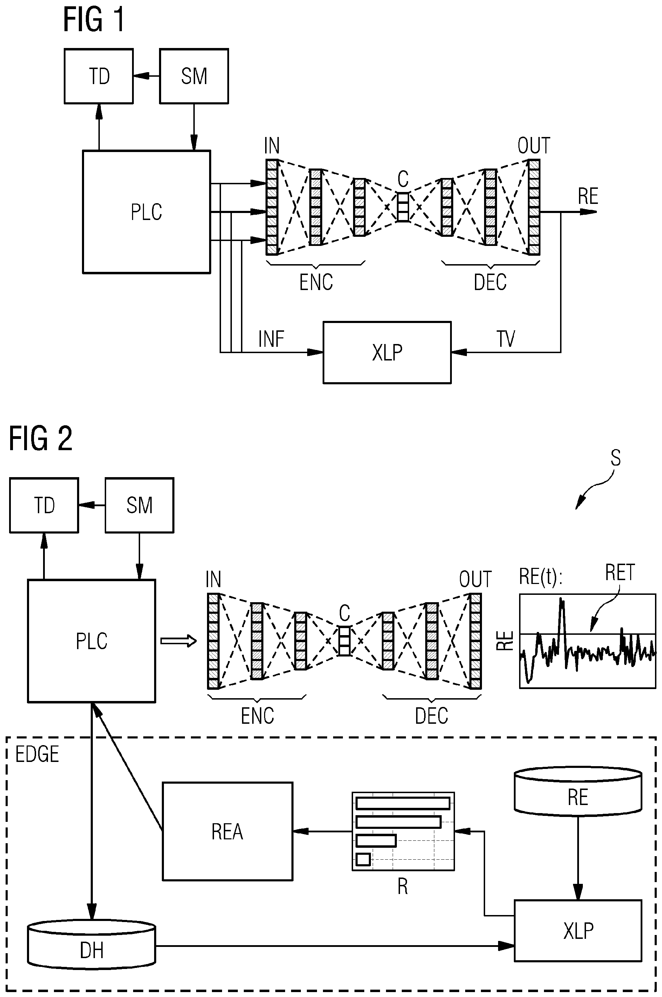

**Fig. 2** zeigt das Ausführungsbeispiel der Fig. 1 für das erfindungsgemäße Verfahren im Detail, wobei folgende Schritte vorgesehen sind:

a) Bereitstellen von Eingangs-Daten IN durch das Steuer-Mittel PLC, umfassend Sensor-Daten, welche von einem Sensor-Mittel SM am technischen Gerät TD erfasst werden, an einem Daten-Eingang, Kodieren der Eingangs-Daten IN mithilfe eines Auto-Encoders zu kodierten Daten C, und dekodieren der kodierten Daten C mithilfe des Auto-Encoders zu Ausgangs-Daten OUT, und Bestimmen und Klassifizieren eines Rekonstruktions-Fehlers RE,

b) Bestimmen einer Ziel-Variable TV aus dem Rekonstruktions-Fehler RE, wenn der Rekonstruktions-Fehler RE eine vorbestimmte Rekonstruktions-Fehlergrenze RET überschreitet,

c) Bereitstellen eines Modells auf Basis künstlicher Intelligenz, welches mithilfe von historischen Daten DH von Rekonstruktions-Fehlern sowie entsprechenden Eingangs-Merkmalen aus dem Auto-Encoder erzeugt und trainiert wurde, an eine Auswertungs-Vorrichtung XPL,

d) Bestimmen zumindest einer Prädiktion für die Ziel-Variable TV und optional für weitere Variablen, welche von der Ziel-Variable TV abhängen, anhand des Modells durch die Auswertungs-Vorrichtung XPL, und Bereitstellen der zumindest einen Prädiktion an eine Analyse-Vorrichtung REA,

e) Ermitteln einer Regel zur Verbesserung des Rekonstruktions-Fehlers RE durch die Analyse-Vorrichtung REA aus einem vorbestimmten Regel-Satz, und Bereitstellen der Regel an das Steuer-Mittel PLC, und Ansteuern des technischen Geräts TD mithilfe der Regel durch das Steuer-Mittel PLC.

Die Auswertungs-Vorrichtung XPL (engl. "explainer") wird mit gesammelten, historischen Eingangs-Daten erzeugt und trainiert, welche im Auto-Encoder durch sein Modell erzeugt werden, um den Rekonstruktions-Fehler RE zu ermitteln. Dies kann durch Random-Forrest-Regressions-Bäume oder Klassifikations-Bäume implementiert werden.

Regressions-Bäume können lernen den Rekonstruktionsfehler RE als Zielvariable (engl. "target variable") basierend auf Eingangsvariablen vorherzusagen.

Bei Klassifikations-Bäumen können Klassen (engl. "labels") basierend auf Eingangsvariablen vorhergesagt werden.

Die Auswertungs-Vorrichtung XPL kann diese Klassen bilden, indem der Rekonstruktionsfehler über einen bestimmten Zeitraum automatisiert in Gruppen (engl. "cluster") eingeteilt wird. Diese Gruppen können dazu dienen, die Klassen abzuleiten und die Eingangsvariablen mit ihren Gruppen können dazu dienen, Klassifikations-Bäume anzulernen.

So liefert die Auswertungs-Vorrichtung XPL Informationen bezüglich Variablen-Wichtigkeit und Interaktion zwischen Variablen.

Die aus der Auswertungs-Vorrichtung XPL erhaltenen Informationen werden nun dazu verwendet, um Regeln zu definieren, welche zu einer Verbesserung des Rekonstruktions-Fehler RE führen sollen. Solche Regeln können beispielsweise eine halb- oder vollautomatische Anpassung von Betriebskenngrößen des technischen Geräts TD sein, oder auch die Durchführung einer Kalibrierung oder einer Sensor-Reinigung.

Die Analyse-Vorrichtung REA kann bei der Regel-Auswahl bevorzugt eine statistische Größe Relevanz R berücksichtigen, mit welcher die Prädiktion in einzelnen Parametern oder Merkmalen gewichtet werden kann, beispielsweise mithilfe der Variablen-Wichtigkeit (engl. "variable importance"), einer Technik zur Bestimmung welche Merkmale innerhalb eines dezidierten Eingangs-Vektors am meisten zu einer Ausgangs-Größe eines Modells beitragen.

Die Analyse-Vorrichtung REA ist bevorzugt Regel-basiert, kann optional aber auch ein Modell künstlicher Intelligenz anwenden.

Die "variable importance" wird mit dem vorher erörterten XPL-Ansatz ermittelt. Ein Regel-Satz wird anhand von Regeln {engl. "IF 'condition' THEN 'result'"} definiert.

Für jede Regel im Regel-Satz wird eine Relevanz R berechnet, indem bestimmt wird, welche Eingabevariablen mittels Variable Importance identifiziert worden sind und welche Variablen in dem Regel Set behandelt werden.

Ein Beispiel einer Regel ist

```
{IF ,vibration' == HIGH AND ,temperature' == LOW
AND ,drivespeed' == LOW THEN 'action:drivespeed-
increase'}
```

Es ist vorgesehen, dass die Prädiktion ein oder mehrere Parameter umfasst, welche von der Ziel-Variablen TV abhängen.

Die Figur zeigt auch ein Ausführungsbeispiel mit einem Blockdiagramm für ein erfindungsgemäßes System S.

Das System S weist ein technisches Gerät TD auf.

Ferner ist ein Steuer-Mittel PLC umfasst, welches Sensor-Daten als Eingangs-Daten IN bereitstellt.

Dabei ist das Steuer-Mittel PLC mit einem Sensor-Mittel SM verbunden, welches Sensor-Daten - das technische Gerät TD betreffend - erfasst, wie beispielsweise Bilddaten von einer Kamera, welche die Produktion von Produkten optisch erfasst und für eine optische Inspektion von erzeugten Produkten eingesetzt wird, und dem Auto-Encoder bereitstellt.

In der Rechen-Vorrichtung EDGE mit einem Speicher und einem Prozessor ist der Auto-Encoder implementiert und kann ferner die Auswertungs-Vorrichtung XPL und die Analyse-Vorrichtung REA umfassen.

Außerdem können die historischen Daten DH, welche aus bereits vom Auto-Encoder analysierten Eingangs-Daten IN gebildet werden, sowie das Modell und Rekonstruktions-Fehler RE in der Rechen-Vorrichtung EDGE verarbeitet und gespeichert sein. Die historischen Daten DH liefern die Grundlage für das Modell der Auswertungs-Vorrichtung XPL im Schritt c) des Verfahrens.

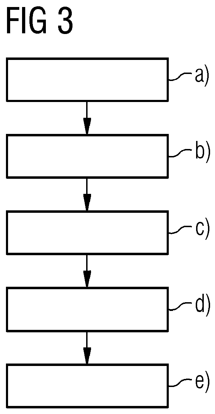

**Fig. 3** zeigt ein Ausführungsbeispiel für ein Ablaufdiagramm für das erfindungsgemäße Verfahren.

**Bezugszeichenliste:**

C        kodierte Daten (engl. "coded data")

DEC      Dekodier-Vorrichtung (engl. "decoder")

DH       historische Daten

EDGE     Rechen-Vorrichtung an einer Edge eines Klienten/Server-Systems

ENC      Kodier-Vorrichtung (engl. "encoder")

IN       Eingangs-Daten

OUT      Ausgangs-Daten

PLC      Programmierbarer Logik-Kontroller

R        Relevanz

RE       Rekonstruktions-Fehler (engl. "reconstruction error")

RET      Rekonstruktions-Fehlergrenze (engl. "reconstruction error threshold")

REA      Analyse-Vorrichtung (engl. "reasoning engine")

S        System

SM       Sensor-Mittel, beispielsweise eine Kamera

t          Zeit

TD       technisches Gerät (engl. "technical device")

TV       Ziel-Variable (engl. "target variable")

XPL     Auswertungs-Vorrichtung (engl. "explainer")

**Patentansprüche**

1. Computer-implementiertes Verfahren zur Anomalie-Erkennung bei der Steuerung eines technischen Geräts (TD) durch ein Steuer-Mittel (PLC), umfassend folgende Schritte:

   a) Bereitstellen von Eingangs-Daten (IN) durch das Steuer-Mittel (PLC), umfassend Sensor-Daten, welche von einem Sensor-Mittel (SM) am technischen Gerät (TD) erfasst werden, an einem Daten-Eingang, Kodieren der Eingangs-Daten (IN) mithilfe eines Auto-Encoders zu kodierten Daten (C), und dekodieren der kodierten Daten (C) mithilfe des Auto-Encoders zu Ausgangs-Daten (OUT), und Bestimmen und Klassifizieren eines Rekonstruktions-Fehlers (RE),
   b) Bestimmen einer Ziel-Variable (TV) aus dem Rekonstruktions-Fehler (RE), wenn der Rekonstruktions-Fehler (RE) eine vorbestimmte Rekonstruktions-Fehlergrenze (RET) überschreitet,
   c) Bereitstellen eines Modells auf Basis künstlicher Intelligenz, welches mithilfe von historischen Daten (DH) von Rekonstruktions-Fehlern sowie entsprechenden Eingangs-Merkmalen aus dem Auto-Encoder erzeugt und trainiert wurde, an eine Auswertungs-Vorrichtung (XPL),
   d) Bestimmen zumindest einer Prädiktion für die Ziel-Variable (TV) und optional für weitere Variablen, welche von der Ziel-Variable (TV) abhängen, anhand des Modells und der Klassifizierung des Rekonstruktionsfehlers (RE) durch die Auswertungs-Vorrichtung (XPL), und Bereitstellen der zumindest einen Prädiktion an eine Analyse-Vorrichtung (REA),
   e) Ermitteln einer Regel zur Verbesserung des Rekonstruktions-Fehlers (RE) durch die Analyse-Vorrichtung (REA) aus der zumindest einen Prädiktion und einem vorbestimmten Regel-Satz, Bereitstellen der Regel an das Steuer-Mittel (PLC) und Ansteuern des technischen Geräts (TD) mithilfe der Regel durch das Steuer-Mittel (PLC).

2. System (S) zur Anomalie-Erkennung bei der Steuerung eines technischen Geräts (TD) durch ein Steuer-Mittel (PLC), umfassend ein Sensor-Mittel (SM) zur Erfassung von Sensor-Daten betreffend das technische Gerät (TD), sowie einen Speicher zur Speicherung von historischen Daten (DH), eine Auswertungs-Vorrichtung (XPL) und eine Analyse-Vorrichtung (REA), und das System (S) dazu eingerichtet ist, das Verfahren nach dem vorhergehenden Anspruch auszuführen.

3. System nach dem vorhergehenden Anspruch, wobei das System an einer Edge eines Klienten-Server-Systems angeordnet ist.

4. System nach einem der Ansprüche 2 oder 3, wobei das Sensor-Mittel (SM) eine Kamera ist und die Sensor-Daten Kamera-Bilder sind.

5. Computerprogramm, umfassend Befehle, welche bei deren Ausführung durch einen Computer das System nach einem der vorhergehenden Ansprüche veranlassen, das Verfahren nach Anspruch 1 auszuführen.

6. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach Anspruch 1 durchführen.

**Claims**

1. Computer-implemented method for anomaly detection during the control of a technical device (TD) by a control means (PLC), comprising the following steps:

   a) provision of input data (IN) by the control means, comprising sensor data which is captured by a sensor means (SM) at the technical device (TD), at a data input, coding of the input data (IN) with the aid of an autoencoder to form coded data (C) and decoding of the coded data (C) with the aid of the autoencoder to form output data (OUT), and determination and classification of a reconstruction error (RE),

b) determination of a target variable (TV) from the reconstruction error (RE), if the reconstruction error (RE) exceeds a predetermined reconstruction error threshold (RET),

c) provision of a model on the basis of artificial intelligence to an evaluation device (XPL), said model having been generated and trained with the aid of historic data (DH) from reconstruction errors and corresponding input features from the autoencoder,

d) determination by the evaluation device (XPL) of at least one prediction for the target variable (TV) and optionally for further variables which depend on the target variable (TV), using the model and the classification of the reconstruction error (RE), and provision of the at least one prediction to an analysis device (REA),

e) determination by the analysis device (REA) of a rule for improving the reconstruction error (RE) from the at least one prediction and a predetermined rule set, provision of the rule to the control means (PLC), and control by the control means (PLC) of the technical device (TD) with the aid of the rule.

2. System (S) for anomaly detection during the control of a technical device (TD) by a control means (PLC), comprising a sensor means (SM) for capturing sensor data relating to the technical device (TD), and a memory for storing historic data (DH), an evaluation device (XPL) and an analysis device (REA), the system (S) being designed to execute the method according to the preceding claims.

3. System according to the preceding claim, wherein the system is arranged at an edge of a client-server system.

4. System according to one of claims 2 or 3, wherein the sensor means (SM) is a camera and the sensor data is camera images.

5. Computer program, comprising commands which, when executed by a computer, cause the system according to one of the preceding claims to execute the method according to claim 1.

6. Electronically readable data carrier with readable control information stored thereon, which comprises at least the computer program according to the preceding claim and is designed such that, when the data carrier is used in a computing device, it executes the method according to claim 1.

**Revendications**

1. Procédé mis en œuvre par ordinateur pour la détection d'anomalie lors de la commande d'un appareil technique (TD) par un moyen de commande (PLC), comprenant les étapes suivantes :

a) fourniture de données d'entrée (IN) par le moyen de commande (PLC), comprenant des données de capteur, lesquelles sont saisies par un moyen de capteur (SM) sur l'appareil technique (TD), à une entrée de données, codage des données d'entrée (IN) en données codées (C) à l'aide d'un auto-codeur, et décodage des données codées (C) en données de sortie (OUT) à l'aide de l'auto-codeur, et détermination et classification d'une erreur de reconstruction (RE),

b) détermination d'une variable cible (TV) à partir de l'erreur de reconstruction (RE), lorsque l'erreur de reconstruction (RE) dépasse un seuil d'erreur de reconstruction prédéfini (RET),

c) fourniture d'un modèle sur la base d'une intelligence artificielle, lequel a été produit et entraîné à l'aide de données historiques (DH) d'erreurs de reconstruction ainsi que de caractéristiques d'entrée correspondantes à partir de l'auto-codeur, à un dispositif d'évaluation (XPL),

d) détermination d'une prédiction au moins pour la variable cible (TV) et facultativement pour d'autres variables, lesquelles dépendent de la variable cible (TV), à l'aide du modèle et de la classification de l'erreur de reconstruction (RE) par le dispositif d'évaluation (XPL), et fourniture de la au moins une prédiction à un dispositif d'analyse (REA),

e) détermination d'une règle pour l'amélioration de l'erreur de reconstruction (RE) par le dispositif d'analyse (REA) à partir de la au moins une prédiction et d'un ensemble de règles prédéterminé, fourniture de la règle au moyen de commande (PLC) et activation de l'appareil technique (TD) à l'aide de la règle par le moyen de commande (PLC).

2. Système (S) pour la détection d'anomalie lors de la commande d'un appareil technique (TD) par un moyen de commande (PLC), comprenant un moyen de capteur (SM) pour saisir des données de capteur concernant l'appareil technique (TD), ainsi qu'une mémoire pour enregistrer des données historiques (DH), un dispositif d'évaluation (XPL) et un dispositif d'analyse (REA), et le système (S) est conçu pour exécuter le procédé selon la revendication précédente.

3. Système selon la revendication précédente, dans lequel le système est disposé à une périphérie d'un système client-serveur.

4. Système selon l'une des revendications 2 ou 3, dans lequel le moyen de capteur (SM) est une caméra et les données de capteur sont des images d'appareil photo.

5. Programme informatique, comprenant des instructions, lesquelles lors de leur exécution par un ordinateur incitent le système selon l'une des revendications précédentes, à exécuter le procédé selon la revendication 1.

6. Support de données lisible électroniquement avec des informations de commande lisibles enregistrées dessus, lesquelles comprennent au moins le programme informatique selon la revendication précédente et sont conçues de manière telle qu'elles effectuent le procédé selon la revendication 1 lors de l'utilisation du support de données dans un dispositif de calcul.

# FIG 1

# FIG 2

FIG 3

EP 4 505 254 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3876060 A1
- US 2020310370 A1